# EUROPÄISCHE PATENTSCHRIFT

(11) **EP 3 047 177 B1**
(45) Veröffentlichungstag und Bekanntmachung des Hinweises auf die Patenterteilung: **30.05.2018**
(21) Anmeldenummer: 14753054.7
(22) Anmeldetag: 15.08.2014
(51) Int. Cl.: F16H 57/04, B60K 7/00, B60K 17/04

(54) **LÄNGSLENKER**
LONGITUDINAL SWINGING ARM
BRAS OSCILLANT LONGITUDINAL

(30) Priorität: 20.09.2013 DE 102013218987
(43) Veröffentlichungstag der Anmeldung: 27.07.2016
(73) Patentinhaber: ZF Friedrichshafen AG, 88046 Friedrichshafen (DE)
(72) Erfinder: MAIR, Ulrich, 88046 Friedrichshafen (DE); POLLMEYER, Stephan, 88046 Friedrichshafen (DE)
(86) Internationale Anmeldenummer: PCT/EP2014/067474
(87) Internationale Veröffentlichungsnummer: WO 2015/039822

(56) Entgegenhaltungen:
- WO-A1-2012/159787
- DE-A1-102006 021 680
- DE-A1-102011 080 036
- DE-A1-102011 080 236
- DE-A1-102011 088 644
- JP-A- 2012 137 124
- JP-A- 2013 147 217
- US-A- 3 387 502

## Beschreibung

Die vorliegende Erfindung befasst sich mit einem Längslenker nach Anspruch 1. DE 10 2011 080 236 A1 offenbart einen Längslenker nach dem Oberbegriff des Anspruchs 1. Antriebsvorrichtungen zur radnahen Anordnung bei insbesondere elektrisch antreibbaren Fahrzeugen sind allgemein bekannt. Verwiesen sei beispielsweise auf JP 2012137124 A. Darin beschrieben ist eine Antriebsvorrichtung, die hinsichtlich ihrer Abmessungen so gestaltet ist, dass sie innerhalb des Innendurchmessers des Rades angeordnet werden kann. Innerhalb eines Gehäuses ist ein elektrischer Antriebsmotor angeordnet, der über ein Stirnradgetriebe ein Planetengetriebe antreibt, das wiederum abtriebsseitig ein Fahrzeugrad antreibt.

Ganz unabhängig von JP 2012137124 A weisen Antriebsvorrichtungen zur radnahen Anordnung zumindest einen Antriebsmotor auf, welcher in der Nähe des Antriebsrades angeordnet ist. Dieser Antriebsmotor weist dabei eine Abtriebswelle auf, welche versetzt oder winklig zur Radachse ist. Insbesondere kann der Antriebsmotor an einem Längslenker angeordnet sein und über eine oder mehrere Getriebestufen das Antriebsrad antreiben. Wird das Antriebsrad beim Einfedern entlang des Federwegs bewegt, so wird auch die Antriebsvorrichtung, umfassend den Motor und die Getriebestufen, bewegt. Ist die Antriebsvorrichtung an einem Längslenker angeordnet, so entspricht die Bewegung der Antriebsvorrichtung der Schwenkbewegung des Längslenkers.

Aufgabe der Erfindung ist es, einen Längslenker mit einer alternativen radnahen Antriebsvorrichtung bereitzustellen.

Gelöst wird diese Aufgabe durch die Erfindung nach dem ersten unabhängigen Anspruch. Bevorzugte Ausführungsformen finden sich in den Unteransprüchen.

Insbesondere wird die Aufgabe gelöst durch einen Längslenker, der gegenüber einem Fahrzeugaufbau und/oder Hilfsrahmen eines Fahrzeugs schwenkbar lagerbar ist, aufweisend eine Antriebsvorrichtung zur radnahen Anordnung in dem Fahrzeug, wobei die Antriebsvorrichtung zumindest einen Antriebsmotor, zwei Getriebestufen und einen Ölkreislauf zur Beölung der zwei Getriebestufen aufweist, wobei die erste Getriebestufe ein Planetengetriebe und die zweite Getriebestufe ein Stirnradgetriebe aufweist, wobei eine Abtriebswelle des Antriebsmotors mit dem Planetengetriebe verbunden ist und eine Abtriebswelle des Planetengetriebes mit dem Stirnradgetriebe verbunden ist, wobei die Antriebsvorrichtung zumindest einen ersten Innenraum aufweist, der eine erste Ölbevorratung ausbildet und eine erste der zwei Getriebestufen zumindest teilweise umfasst und zwischen den beiden Getriebestufen eine Trennvorrichtung vorgesehen ist, welche die erste Ölbevorratung für die erste Getriebestufe von einer zweiten Ölbevorratung für die zweite Getriebestufe trennt, wobei die Trennvorrichtung eine Öffnung aufweist, durch welche Öl von der ersten Ölbevorratung zur zweiten Ölbevorratung transportiert werden kann.

Erfindungsgemäß weist dabei die erste Getriebestufe ein Planetengetriebe und die zweite Getriebestufe ein Stirnradgetriebe auf. So kann einerseits eine große Übersetzung aufgrund des Planetengetriebes zwischen dem Elektromotor und dem Antriebsrad verwirklicht werden, auf der anderen Seite kann die Komplexität durch die Verwendung des Stirnradgetriebes in vernünftigen Grenzen gehalten werden. Außerdem kann über das Stirnradgetriebe zwischen der Abtriebswelle des Elektromotors und der Antriebswelle des Antriebsrades ein Versatz hergestellt werden, so dass der Elektromotor und Teile der Getriebestufen versetzt zu der Antriebswelle des Antriebsrades angeordnet sind.

Durch die Anordnung der Antriebsvorrichtung auf dem Längslenker versetzt zu der Radachse wird das Gewicht der Antriebsvorrichtung näher in Richtung der Schwenkachse des Längslenkers angeordnet, wodurch sich eine günstigere Kinematik ergibt.

Erfindungsgemäß ist weiterhin die Abtriebswelle des Antriebsmotors mit dem Planetengetriebe verbunden und die Abtriebswelle des Planetengetriebes mit dem Stirnradgetriebe verbunden.

Erfindungsgemäß wurde erkannt, dass die Beölung der Getriebestufen bei radnahen Antrieben in unterschiedlichen Lagen der Antriebsvorrichtung in Bezug auf den Fahrzeugaufbau gewährleistet sein muss.

Gerade, da bei der Beölung von Getriebestufen das Schmiermittel durch die Schwerkraft in Bevorratungen gehalten wird oder durch Leitungen transportiert wird ergibt sich durch eine Veränderung der Lage der Antriebsvorrichtung, insbesondere durch ein Verschwenken der Antriebsvorrichtung eine Verschiebung des Schmiermittels, wodurch dem zu schmierenden Bauteil zu viel oder zu wenig Schmiermittel zugeführt werden kann.

Die vorliegende Erfindung schlägt deshalb für die erste Getriebestufe eine insbesondere wannenförmige Ölbevorratung vor, so dass beim Einschwenken der Antriebsvorrichtung das Öl nicht von einer Getriebestufe zur anderen Getriebestufe fließt, sondern zumindest eine Minimalmenge an Öl jeder Getriebestufe zur Verfügung steht.

Bevorzugt ragt ein bewegliches Getriebeteil der ersten Getriebestufe in die erste Ölbevorratung und/oder ein bewegliches Getriebeteil der zweiten Getriebestufe in die zweite Ölbevorratung hinein. So ist erkannt worden, dass das Öl aus der ersten Ölbevorratung und/oder das Öl aus der zweiten Ölbevorratung durch jeweils ein bewegliches Getriebeteil bewegt und so das Öl durch das bewegliche Getriebeteil an ein zu schmierendes Bauteil bewegt werden kann. So kann das Öl unabhängig von der Schwerkraft, unter Zuhilfenahme der Bewegung der Getriebeteile aktiv gefördert werden und so eine Schmierung unabhängig von der Ausrichtung des Längslenkers und somit von der Ausrichtung der Antriebsvorrichtung gewährleistet werden.

Das bewegliche Getriebeteil kann ein Schöpfrad sein. Ein solches Schöpfrad reicht in die Ölbevorratung und schöpft Öl aus der Ölbevorratung. Bevorzugt ist das Schöpfrad durch den Planetenradsatz angetrieben, insbesondere kann das Schöpfrad mit den Planetenträgern verbunden sein. Das Schöpfrad kann dabei eine Rotationsachse aufweisen, welche parallel oder koaxial ist zur Rotationsachse einer der Elemente des Planetengetriebes, besonders des Planetengetriebes und/oder des Stirnradgetriebes.

So kann das Schöpfrad Öl aus der zweiten Ölbevorratung, welche dem Planetengetriebe zugeordnet ist, durch einen Durchbruch in den ersten Gebtriebebereich schöpfen. Dabei kann der erste Getriebebereich dem Stirnradgetriebe zugeordnet sein und die erste Ölbevorratung umfassen. Insbesondere kann auch der Planetenträger an sich als Schöpfrad ausgebildet sein.

Auch kann ein Stirnrad des Stirnradgetriebes so angeordnet sein, dass es in die Ölbevorratung hineinreicht. So kann das Stirnrad ebenfalls zur Beförderung von Öl verwendet werden, indem durch die Bewegung des Stirnrades Öl aus der Ölbevorratung mitgenommen wird und z. B. in einem Fangbecken aufgefangen wird.

Die Ölbevorratungen können so ausgebildet sein, dass sowohl in der vorgesehenen Normallage der Antriebsvorrichtung, als auch in einer Lage, welcher der Lage der Antriebsvorrichtung in einem belasteten Fahrzeug entspricht, in den Ölbevorratungen Öl gehalten werden kann. So können die Ölbevorratungen wannenförmig ausgestaltet werden, so dass bei einem Verschwenken der Antriebsvorrichtung die Wannenwände zumindest teilweise das Öl in der Ölbevorratung zurückhalten, so dass ein Minimalvorrat in der Ölbevorratung bleibt. Bei einem Verschwenken der Antriebsvorrichtung kann Öl aus einer Ölbevorratung über die Trennvorrichtung in die andere Ölbevorratung fließen. Die Trennvorrichtung weist dabei eine Öffnung auf, durch welche Öl von der ersten Ölbevorratung zur zweiten Ölbevorratung transportiert werden kann. So kann ein maximaler Ölstand über die Wannenwände bzw. die Öffnung in der Trennvorrichtung festgelegt werden. Bevorzugt ist die Öffnung so positioniert, dass Öl mittels des beweglichen Getriebeteils der ersten Getriebestufe durch die erste Öffnung in die zweite Ölbevorratung transportiert werden kann und so über das Schöpfrad, welches an dem Planetengetriebe angeordnet ist, Öl aus der ersten Ölbevorratung über den Durchbruch in die zweite Ölbevorratung transportiert wird. Da das Schöpfrad im Allgemeinen rotationssymmetrisch aufgebaut ist, ist es geeignet, auch bei einer Verlagerung des Ölpegels durch das Verschwenken der Antriebsvorrichtung, Öl aus der Ölbevorratung zu schöpfen. Die Drehachse des Schöpfrads kann dabei parallel zur Schwenkachse der Antriebsvorrichtung, beispielsweise der Schwenkachse des Längslenkers, sein.

Bevorzugt weist die Antriebsvorrichtung ein Ölfangbecken auf, mit der Öl aufgefangen wird, welches durch das Stirnrad aus der zweiten Ölbevorratung transportiert wird, aufgefangen wird. Das Ölfangbecken ist mit einer Bohrung in der Welle des Ritzels, welches in dem Stirnrad kämmt, verbunden. Durch die Bohrung kann das Öl aus dem Ölfangbecken durch die Bohrung der Sonne des Planetengetriebes an die Planeten des Planetengetriebes transportiert werden. Bevorzugt ist ein Ölfangbecken vorgesehen, welche sich von der zweiten Ölbevorratung unterscheidet und so positioniert ist, dass Öl, welches durch das bewegliche Getriebeteil der zweiten Getriebestufe bewegt wird, zumindest teilweise in das Ölfangbecken gelangt. Bevorzugt weist das Ölfangbecken eine Öffnung auf, durch welche Öl aus dem Ölfangbecken in die erste Ölbevorratung gelangen kann.

Im Weiteren wird die Erfindung anhand eines Ausführungsbeispieles unter Zuhilfenahme der Zeichnungen näher beschrieben. Dabei zeigt:
- Fig. 1: eine schematische Darstellung der Antriebsvorrichtung mit dem Ölkreislauf,
- Fig. 2: eine Schnittansicht der Antriebsvorrichtung nach Fig. 2 entlang der Linie A-A,
- Fig. 3: eine Schnittansicht der Antriebsvorrichtung nach Fig. 2 entlang der Linie B-B.

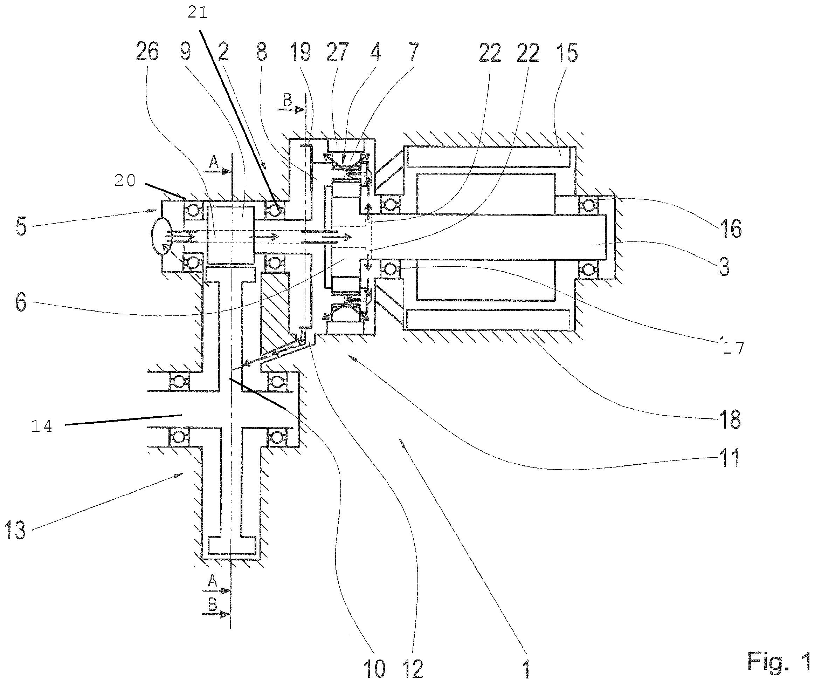

Fig. 1 zeigt die Getriebeeinheit 2 einer Antriebsvorrichtung 1 umfassend eine Motorwelle 3, ein Planetengetriebe 4 und ein Stirnradgetriebe 5. Die Motorwelle 3 ist dabei mit der Sonne 6 des Planetengetriebes 4 verbunden, wobei die Sonne 6 in den Planeten 7 kämmt, welche rotierbar am Planetenträger 8 befestigt sind. Die Planeten 7 kämmen weiter an dem Hohlrad 27. Am Planetenträger 8 ist das Schöpfrad 19 befestigt. Der Planetenträger 8 ist mit dem Ritzel 9 des Stirnradgetriebes 5 verbunden, welches in den zweiten Stirnrad 10 kämmt. Der erste Getriebebereich 11, welcher das Planetengetriebe 4 umfasst, ist über einen Durchbruch 12 mit dem zweiten Getriebebereich 13, welcher das Stirnradgetriebe umfasst, verbunden. Das zweite Stirnrad ist mit der Abtriebswelle 14 verbunden, welches mit dem Antriebsrad verbunden ist.

Die Antriebsvorrichtung 1 umfasst weiter einen Antriebsmotor 15, wobei die Motorwelle 3 ist über die Lager 16 und 17 an dem Gehäuse rotierbar gelagert. Die Motorwelle 3 ist starr mit der Sonne 6 des Planetengetriebes 4 verbunden. Die Sonne 6 kämmt in den Planeten 7, welche an den Planetenträger 8 rotierbar gelagert sind. Der Planetenträger weist Schöpfvorrichtungen 19 auf. Der Planetenträger ist mit dem Ritzel 9 verbunden, wobei das Ritzel 9 mittels der Lager 20 und 21 am Gehäuse 18 rotierbar gelagert ist. Der Planetenträger, welcher hier einstückig mit dem Ritzel 9 ausgebildet ist, weist eine Bohrung 26 auf, welche über geht in eine Bohrung durch die Sonne 6. Die Bohrung 26 in dem Ritzel 9 bzw. der Sonne 6 ist dabei entlang oder parallel zur entsprechenden Rotationsachse. Die Bohrung durch die Sonne 6 ist versehen mit mindestens einer, vorzugsweise zwei Querbohrungen 22, welche an der Außenseite der Motorwelle 3 münden. Das Ritzel 9 kämmt in dem Stirnrad 10, welches mit der Abtriebswelle 14 der Getriebeeinheit fest verbunden ist. Durch die Bewegung des Elektromotors 15 wird nun die Motorwelle 3 bewegt, welche die Sonne 6 antreibt. Dadurch werden die Planeten, welche in der Sonne 6 und dem Hohlrad 27 kämmen, angetrieben. Dadurch wird weiter der Planetenträger 8 in Rotation versetzt, wodurch die Schöpfelemente 19 in der Ölbevorratung schöpfen. Durch die Schöpfelemente 19 wird das Öl aus der ersten Ölbevorratung 23 durch den Durchbruch 12 in den zweiten Getriebebereich 13 transportiert. Von dort gelangt es über das Stirnrad 10 in die zweite Ölbevorratung 24. In der zweiten Ölbevorratung reicht das zweite Stirnrad 10 und schöpft daraus Öl in ein Ölfangbecken 25. Das Ölfangbecken 25 ist mit der Bohrung 26 verbunden, so dass das Öl aus dem Ölfangbecken 25 durch die Bohrung 26 in den ersten Getriebebereich gelangt.

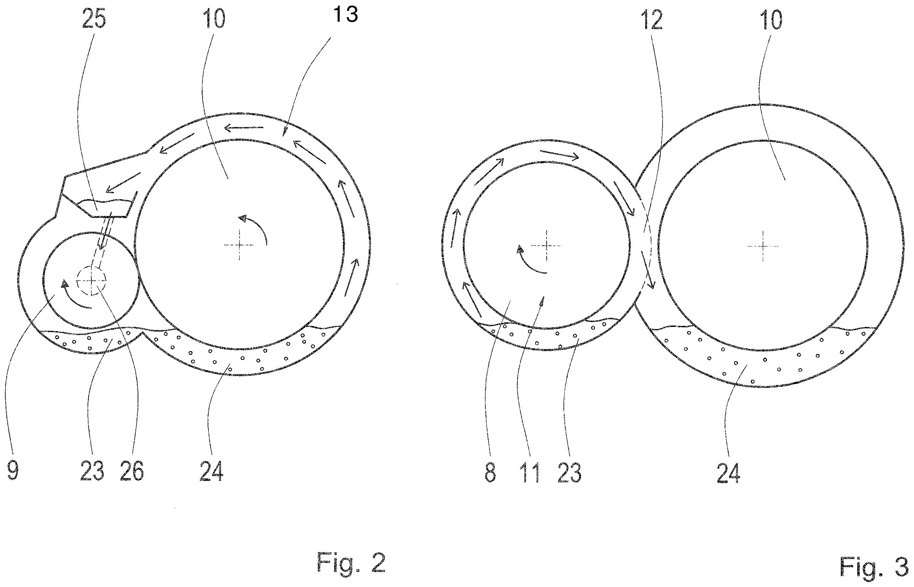

Fig. 2 zeigt einen Schnitt entlang der Linie A-A aus Fig. 1. Dabei ist der zweite Getriebebereich 13 mit dem zweiten Stirnrad 10 zu sehen, wobei das zweite Stirnrad 10 in der zweiten Ölbevorratung 24 hineinreicht. Durch die Drehung des Stirnrades 10 wird das Öl aus der zweiten Ölbevorratung 24 in ein Fangbecken 25 befördert. Das Fangbecken 25 befindet sich dabei in der Nähe des ersten Ritzels 9 und hat eine Verbindung zu der Bohrung 26 in der Welle des ersten Stirnrades 9. Das Ritzel 9 findet sich hier oberhalb der ersten Ölbevorratung 23. Durch die Bohrung 26 wird das Öl in den ersten Getriebebereich 11 transportiert.

Fig. 3 zeigt eine Schnittansicht B-B der Antriebseinheit aus Fig. 1. Dabei zeigt es das Stirnrad 10, welches im zweiten Getriebebereich 13 in die zweite Ölbevorratung 24 hineinreicht. In dem ersten Getriebebereich 11 ist der Planetenträger 8 mit den Schöpfvorrichtungen 19 angeordnet, so dass er in der ersten Ölbevorratung 23 schöpft. Dadurch wird das Öl aus der Ölbevorratung 23 durch das Schöpfrad 19, durch den Durchbruch 12, in den zweiten Getriebebereich 13 transportiert.

### Bezugszeichen

- 1: Antriebsvorrichtung
- 2: Getriebeeinheit
- 3: Motorwelle
- 4: Planetenradgetriebe
- 5: Stirnradgetriebe
- 6: Sonne
- 7: Planet
- 8: Planetenträger
- 9: Erstes Stirnrad
- 10: Zweites Stirnrad
- 11: Erster Getriebebereich
- 12: Durchbruch
- 13: Zweiter Getriebebereich
- 14: Abtriebswelle
- 15: Antriebsmotor
- 16: Lager
- 17: Lager
- 18: Gehäuse
- 19: Schöpfvorrichtung
- 20: Lager
- 21: Lager
- 22: Bohrung
- 23: Erste Ölbevorratung
- 24: Zweite Ölbevorratung
- 25: Ölfangbecken
- 26: Bohrung
- 27: Hohlrad

## Patentansprüche

1. Längslenker, der gegenüber einem Fahrzeugaufbau und/oder Hilfsrahmen eines Fahrzeugs schwenkbar lagerbar ist, aufweisend eine Antriebsvorrichtung (1) zur radnahen Anordnung in dem Fahrzeug, wobei die Antriebsvorrichtung (1) zumindest einen Antriebsmotor (15) und zwei Getriebestufen (4, 5) aufweist, wobei die erste Getriebestufe (4) ein Planetengetriebe und die zweite Getriebestufe (5) ein Stirnradgetriebe aufweist, wobei eine Abtriebswelle (3) des Antriebsmotors (15) mit dem Planetengetriebe verbunden ist und eine Abtriebswelle des Planetengetriebes mit dem Stirnradgetriebe verbunden ist, **dadurch gekennzeichnet, dass** die Antriebsvorrichtung (1) einen Ölkreislauf zur Beölung der zwei Getriebestufen (4, 5) aufweist, wobei die Antriebsvorrichtung (1) zumindest einen ersten Innenraum aufweist, der eine erste Ölbevorratung (23) ausbildet und die erste Getriebestufe (4) zumindest teilweise umfasst und zwischen den beiden Getriebestufen eine Trennvorrichtung vorgesehen ist, welche die erste Ölbevorratung (23) für die erste Getriebestufe (4) von einer zweiten Ölbevorratung (24) für die zweite Getriebestufe (5) trennt, wobei die Trennvorrichtung eine Öffnung (12) aufweist, durch welche Öl von der ersten Ölbevorratung (23) zur zweiten Ölbevorratung (24) transportiert werden kann.

2. Längslenker nach Anspruch 1, **dadurch gekennzeichnet, dass** ein bewegliches Getriebeteil (19) der ersten Getriebestufe (4) in die erste Ölbevorratung (23) und/oder ein bewegliches Getriebeteil (10) der zweiten Getriebestufe (5) in die zweite Ölbevorratung (24) hineinreicht.

3. Längslenker nach dem vorhergehenden Anspruch, **dadurch gekennzeichnet, dass** das bewegliche Getriebeteil ein Schöpfrad (19) ist.

4. Längslenker nach Anspruch 3, **dadurch gekennzeichnet, dass** das Schöpfrad (19) an einem Steg des Planetengetriebes (8) angeordnet ist.

5. Längslenker nach Anspruch 2, **dadurch gekennzeichnet, dass** das bewegliche Getriebeteil ein Stirnrad (10) ist.

6. Längslenker nach einem der vorigen Ansprüche, **dadurch gekennzeichnet, dass** die Ölbevorratungen (23, 24) wannenförmig derart ausgebildet sind, dass bei einem Verschwenken der Antriebsvorrichtung (1) die Wannenwände zumindest teilweise das Öl in den Ölbevorratungen (23, 24) zurückhalten, so dass sowohl in der vorgesehenen Normallage der Antriebsvorrichtung, als auch in einer Lage, die einer Lage der Antriebsvorrichtung in einem belasteten Fahrzeug entspricht, ein Minimalvorrat in den Ölbevorratungen (23, 24) bleibt.

7. Längslenker nach einem der Ansprüche 2 bis 5, **dadurch gekennzeichnet, dass** die Öffnung (12) so positioniert ist, dass Öl mittels des beweglichen Getriebeteils (19) der ersten Getriebestufe (4) durch die Öffnung (12) in die zweite Ölbevorratung (24) transportiert werden kann.

8. Längslenker nach dem vorhergehenden Anspruch, **dadurch gekennzeichnet, dass** ein Ölleitblech vorgesehen ist, welches Öl, das durch das bewegliche Getriebeteil der ersten Getriebestufe bewegt worden ist durch die Öffnung in die zweite Ölbevorratung (24) leitet.

9. Längslenker nach einem der Ansprüche 2 bis 5, 7 und/oder 8, **dadurch gekennzeichnet, dass** ein Ölfangbecken (25) vorgesehen ist, welche von der zweiten Ölbevorratung (24) unterschiedlich ist und so positioniert ist, dass Öl welches durch das bewegliche Getriebeteil der zweiten Getriebestufe bewegt wird zumindest teilweise in das Ölfangbecken (25) gelangt.

10. Längslenker nach dem vorhergehenden Anspruch, **dadurch gekennzeichnet, dass** an dem Ölfangbecken (25) eine Öffnung vorgesehen ist, durch welche Öl aus dem Ölfangbecken (25) in die erste Ölbevorratung (23) gelangen kann.

11. Längslenker nach Anspruch 9, **dadurch gekennzeichnet, dass** bei dem Ölfangbecken (25) zumindest eine Ölführungsrippe vorgesehen ist, durch welche Öl, welches vom beweglichen Getriebeteil aus der zweiten Ölbevorratung bewegt wurde, in das Ölfangbecken (25) geleitet wird.

## Claims

1. Longitudinal control arm which can be mounted so as to be pivotable relative to a vehicle body and/or subframe of a vehicle, having a drive device (1) for arrangement, close to a wheel, in the vehicle, wherein the drive device (1) has at least one drive motor (15) and two gearing stages (4, 5), wherein the first gearing stage (4) has a planetary gearing and the second gearing stage (5) has a spur gearing, wherein an output shaft (3) of the drive motor (15) is connected to the planetary gearing and an output shaft of the planetary gearing is connected to the spur gearing, **characterized in that** the drive device (1) has an oil circuit for the oiling of the two gearing stages (4, 5), wherein the drive device (1) has at least one first interior space which forms a first oil reservoir (23) and which at least partially encloses the first gearing stage (4), and a separating device is provided between the two gearing stages, which separating device separates the first oil reservoir (23) for the first gearing stage (4) from a second oil reservoir (24) for the second gearing stage (5), wherein the separating device has an opening (12) through which oil can be transported from the first oil reservoir (23) to the second reservoir (24).

2. Longitudinal control arm according to Claim 1, **characterized in that** a movable gearing part (19) of the first gearing stage (4) extends into the first oil reservoir (23) and/or a movable gearing part (10) of the second gearing stage (5) extends into the second oil reservoir (24).

3. Longitudinal control arm according to the preceding claim, **characterized in that** the movable gearing part is a bucket wheel (19).

4. Longitudinal control arm according to Claim 3, **characterized in that** the bucket wheel (19) is arranged on a carrier of the planetary gearing (8).

5. Longitudinal control arm according to Claim 2, **characterized in that** the movable gearing part is a spur gear (10).

6. Longitudinal control arm according to one of the preceding claims, **characterized in that** the oil reservoirs (23, 24) are of trough-like form such that, during a pivoting of the drive device (1), the trough walls at least partially retain the oil in the oil reservoirs (23, 24), such that, both in the provided normal position of the drive device and also in a position which corresponds to a position of the drive device in a laden vehicle, a minimum reserve remains in the oil reservoirs (23, 24).

7. Longitudinal control arm according to one of Claims 2 to 5, **characterized in that** the opening (12) is positioned such that oil can be transported through the opening (12) into the second oil reservoir (24) by means of the movable gearing part (19) of the first gearing stage (4).

8. Longitudinal control arm according to the preceding claim, **characterized in that** an oil-guiding plate is provided which guides oil, which has been moved by the movable gearing part of the first gearing stage, through the opening into the second oil reservoir (24).

9. Longitudinal control arm according to one of Claims 2 to 5, 7 and/or 8, **characterized in that** an oil-collecting basin (25) is provided which differs from the second oil reservoir (24) and which is positioned such that oil that is moved by the movable gearing part of the second gearing stage passes at least partially into the oil-collecting basin (25).

10. Longitudinal control arm according to the preceding claim, **characterized in that**, on the oil-collecting basin (25), there is provided an opening through which oil can pass out of the oil-collecting basin (25) into the first oil reservoir (23).

11. Longitudinal control arm according to Claim 9, **characterized in that**, in the oil-collecting basin (25), there is provided at least one oil-guiding rib by means of which oil that has been moved out of the second oil reservoir by the movable gearing part is guided into the oil-collecting basin (25).

## Revendications

1. Bras oscillant longitudinal, qui peut être monté de façon pivotante par rapport à une structure de véhicule et/ou à un châssis auxiliaire d'un véhicule, présentant un dispositif d'entraînement (1) destiné à être agencé à proximité d'une roue dans le véhicule, dans lequel le dispositif d'entraînement (1) présente au moins un moteur d'entraînement (15) et deux étages de transmission (4, 5), dans lequel le premier étage de transmission (4) est un engrenage planétaire et le deuxième étage de transmission (5) est un engrenage à roues droites, dans lequel un arbre de sortie (3) du moteur d'entraînement (15) est relié à l'engrenage planétaire et un arbre de sortie de l'engrenage planétaire est relié à l'engrenage à roues droites, **caractérisé en ce que** le dispositif d'entraînement (1) présente un circuit d'huile pour la lubrification des deux étages de transmission (4, 5), dans lequel le dispositif d'entraînement (1) présente au moins une première chambre intérieure, qui forme une première réserve d'huile (23) et comprend au moins en partie le premier étage de transmission (4) et il est prévu entre les deux étages de transmission un dispositif de séparation, qui sépare la première réserve d'huile (23) pour le premier étage de transmission (4) d'une deuxième réserve d'huile (24) pour le deuxième étage de transmission (5), dans lequel le dispositif de séparation présente une ouverture (12), à travers laquelle de l'huile peut être transportée de la première réserve d'huile (23) à la deuxième réserve d'huile (24).

2. Bras oscillant longitudinal selon la revendication 1, **caractérisé en ce qu'**une partie de transmission mobile (19) du premier étage de transmission (4) pénètre dans la première réserve d'huile (23) et/ou une partie de transmission mobile (10) du deuxième étage de transmission (5) pénètre dans la deuxième réserve d'huile (24).

3. Bras oscillant longitudinal selon la revendication précédente, **caractérisé en ce que** la partie de transmission mobile est une roue à godets (19).

4. Bras oscillant longitudinal selon la revendication 3, **caractérisé en ce que** la roue à godets (19) est disposée sur une entretoise de l'engrenage planétaire (8) .

5. Bras oscillant longitudinal selon la revendication 2, **caractérisé en ce que** la pièce de transmission mobile est une roue droite (10).

6. Bras oscillant longitudinal selon l'une quelconque des revendications précédentes, **caractérisé en ce que** les réserves d'huile (23, 24) sont réalisées en forme de cuvettes, de telle manière que lors d'un pivotement du dispositif d'entraînement (1) les parois des cuvettes retiennent au moins partiellement l'huile dans les réserves d'huile (23, 24), de telle manière qu'il reste une réserve minimale dans les réserves d'huile (23, 24) aussi bien dans la position normale prévue du dispositif d'entraînement que dans une position, qui correspond à une position du dispositif d'entraînement dans un véhicule chargé.

7. Bras oscillant longitudinal selon l'une quelconque des revendications 2 à 5, **caractérisé en ce que** l'ouverture (12) est positionnée de telle manière que de l'huile puisse être transportée dans la deuxième réserve d'huile (24) à travers l'ouverture (12) au moyen de la partie de transmission mobile (19) du premier étage de transmission (4).

8. Bras oscillant longitudinal selon la revendication précédente, **caractérisé en ce qu'**il est prévu un déflecteur d'huile, qui conduit de l'huile, qui a été déplacée par la partie de transmission mobile du premier étage de transmission, dans la deuxième réserve d'huile (24) à travers l'ouverture.

9. Bras oscillant longitudinal selon l'une quelconque des revendications 2 à 5, 7 et/ou 8, **caractérisé en ce qu'**il est prévu un bassin de collecte d'huile (25), qui est différent de la deuxième réserve d'huile (24) et qui est positionné de telle manière que de l'huile, qui est déplacée par la partie de transmission mobile du deuxième étage de transmission, arrive au moins en partie dans le bassin de collecte d'huile (25).

10. Bras oscillant longitudinal selon la revendication précédente, **caractérisé en ce qu'**il est prévu sur le bassin de collecte d'huile (25) une ouverture, à travers laquelle de l'huile peut arriver du bassin de collecte d'huile (25) dans la première réserve d'huile (23) .

11. Bras oscillant longitudinal selon la revendication 9, **caractérisé en ce qu'**il est prévu près du bassin de collecte d'huile (25) au moins une nervure de guidage d'huile, par laquelle de l'huile, qui a été déplacée par la partie de transmission mobile à partir de la deuxième réserve d'huile, est conduite dans le bassin de collecte d'huile (25).
